# EUROPÄISCHE PATENTSCHRIFT

(11) **EP 0 954 892 B1**
(45) Veröffentlichungstag und Bekanntmachung des Hinweises auf die Patenterteilung: **30.05.2001**
(21) Anmeldenummer: 98907861.3
(22) Anmeldetag: 21.01.1998
(51) Int. Cl.: H02B 11/127

(54) **VERFAHREINRICHTUNG FÜR NIEDERSPANNUNGS-LEISTUNGSSCHALTER**
TRAVERSING DEVICE FOR LOW TENSION POWER SWITCHES
DISPOSITIF DE DEPLACEMENT POUR DISJONCTEUR BASSE TENSION

(30) Priorität: 21.01.1997 DE 19703704
(43) Veröffentlichungstag der Anmeldung: 10.11.1999
(73) Patentinhaber: SIEMENS AKTIENGESELLSCHAFT, 80333 München (DE)
(72) Erfinder: LIEBETRUTH, Marc, D-13465 Berlin (DE)
(86) Internationale Anmeldenummer: DE9800222
(87) Internationale Veröffentlichungsnummer: WO9832201

(56) Entgegenhaltungen:
- DE-A- 3 210 170
- DE-U- 29 601 101
- US-A- 3 030 463
- US-A- 3 784 764

## Beschreibung

Die Erfindung betrifft eine wahlweise kraft- oder handbetriebene Verfahreinrichtung für Niederspannungs-Leistungsschalter mit einer auf einer Gewindespindel angeordneten Wandermutter, die kraftschlüssig mit einer Zahnstange zur Betätigung des Fahrantriebs verbunden ist, bei der zwischen dem elektrischen und dem manuellen Fahrantrieb eine entkoppelbare selbsthemmende oder eine nichtselbsthemmende Verbindung vorhanden ist.

Bisher werden Niederspannungs-Leistungsschalter in ihrem Einschubrahmen ausschließlich durch handgetriebene Vorrichtungen verfahren. Kraftbetriebene Vorrichtungen sind nur von Mittelspannungs-Fahrwagenanlagen bekannt.

Die DE-PS 33 12 415 beschreibt einen Antrieb zum Verschieben eines Schalterträgers in einem elektrischen Schaltfeld mittels einer ortsfest im Schaltfeld angeordneten Gewindespindel, die mittels einer aufsteckbaren Handkurbel drehbar und mit einer mit dem Schalterträger verbundenen Mutter im Eingriff ist. Die Mutter ist auf dem Schalterträger drehbar gelagert und von einem Bremsmotor antreibbar. Die Gewindespindel ist während des Laufens des Bremsmotors gegen Drehen sperrbar und bei gebremstem Motor entsperrbar.

Aus der DE-PS 36 11 389 ist eine weitere Antriebsvorrichtung für eine Schaltgeräteanordnung bekannt, bei der sowohl mit einem Motor- als auch mit einem Handantrieb auf eine Betätigungswelle eingewirkt werden kann und der abkuppelbare Motorantrieb über ein Zahnrad mit der Betätigungswelle in Verbindung steht. Hierbei ist ein Zahnrad ständig mit der Betätigungswelle des Schalters kraftschlüssig verbunden und
zwischen dem Zahnkranz und der Zahnradwelle ist eine Freilaufkupplung für Rechts- und Linkslauf angeordnet, derart, daß der Kraftschluß zwischen dem Zahnrad und der Betätigungswelle nur bei angetriebener Zahnradwelle hergestellt ist.

In beiden Patentschriften ist nur die wahlweise Betätigung einer Welle, nämlich der Schaltwelle des Schalterantriebs mittels Motor oder von Hand beschrieben, sie enthalten keinen Hinweis auf eine wahlweise Betätigung zweier Antriebe, nämlich des Schalterantiebs oder des Ausfahrantriebs des Leistungsschalters durch nur einen Motor.

Eine weitere Vorrichtung zum Verschieben eines elektrischen Schalters in seiner Schaltzelle ist in der EP-A 0 045 545 dargestellt, mit welcher der Schalter aus seiner Betriebsstellung in eine Stellung gefahren werden kann, in der er von der Sammelschiene getrennt ist. Dies kann bei geschlossener Tür der Schaltzelle und nur bei ausgeschaltetem Leistungsschalter erfolgen.

In dieser Anmeldung ist nichts über die Art des Antriebs der Verfahreinrichtung ausgesagt, sondern nur beschrieben, daß ein Bewegen des Leistungsschalters bei geschlossener Tür der Schaltzelle und nur im ausgeschalteten Zustand möglich ist.

Die US-PS 3 716 684 beschreibt einen Verfahrmechanismus für einen ausfahrbaren Leistungsschalter in einer gekapselten Hochspannungsschaltanlage. Diese transportable Vorrichtung enthält einen Motor und ein Untersetzungsgetriebe mit einer Ausgangswelle, die so ausgeführt ist, daß sie mit der Ausfahrwelle eines Leistungsschalters verbindbar ist. Der Motor und das Untersetzungsgetriebe sind auf einem Rahmen montiert, der die zugehörigen Schalter und Relais für die Steuerung des Verfahrmechanismus aufweist und kufenartige Füße zur Positionierung an der Schaltzelle besitzt. Die Vorrichtung ist mittels Klammerelementen an einem Element der Schaltzelle befestigbar.

Bei noch einer weiteren Verfahreinrichtung für einen in einer Schaltzelle angeordneten, zwischen einer Prüfstellung und einer Betriebsstellung bewegbaren Leistungsschalter, die in der US-PS 3 030 463 beschrieben ist, sind ein auf der Schaltereinheit angeordneter Motor, eine elektrisch betätigte Kupplung zur Verbindung des Motors mit der Verfahreinrichtung zum Betreiben der Verfahreinrichtung und mechanische Verriegelungselemente zum Verhindern des Schließens der Kontakte des Leistungsschalters, wenn sich die Schaltereinheit in irgendeiner Position zwischen der Betriebsstellung und der Prüfstellung befindet, vorgesehen.

Alle Patente betreffen Hoch- oder Mittelspannungs-Leistungsschalter, vorwiegend in gekapselten Schaltanlagen, und in keiner Beschreibung ist die Verwendung nur eines Motors zur wahlweisen Betätigung des Leistungsschalters beziehungsweise des Fahrantriebs zum Verfahren des Leistungsschalters beschrieben.

Der Erfindung liegt somit das Problem zugrunde, eine elektrische Verfahreinrichtung für Niederspannungs-Leistungsschalter zu schaffen, bei der der Motor für den Schalterantrieb wahlweise auch für den Verfahrantrieb verwendet wird.

Diese Aufgabe wird erfindungsgemäß durch die im Kennzeichen des Anspruchs 1 angegebenen Merkmale gelöst. Vorteilhafte Weiterbildungen der Erfindung sind in den Unteransprüchen angegeben.

Die vorliegende Erfindung ist als Schalterzubehör gedacht, kann aber in der vorliegenden Form auch als Nachrüstsatz für vorhandene Schalter eingesetzt werden. Dabei ist vorgesehen, daß durch einen Elektromotor zwei Funktionen ausgeübt werden. Üblich ist die Übertragung des zum Spannen des Federspeichers erforderlichen Drehmomentes durch einen Elektromotor auf den Federspeicher des Schalterantriebs, wobei ein Freilauf zum Handantrieb für den Notbetrieb beim Ausfall des elektrischen Antriebs vorgesehen ist.

Zusätzlich zu dieser Funktion wird erfindungsgemäß der genannte Elektromotor zur Betätigung der Welle des Fahrantriebs des Leistungsschalters verwendet. Das geschieht durch eine Übertragung des Drehmomentes zur Einfahrwelle des Leistungsschalters, was beispielsweise mittels eines Zahnradgetriebes erfolgen kann. Hierzu wird eine schaltbare Kupplung, zweckmäßig einteilig mit einer Hälfte des Freilaufs, verwendet. Das Schalten der Kupplung erfolgt durch das Umlegen eines Hebels, der von außen zugänglich am Bedienpult angeordnet ist. Beim Umlegen des Hebels von einer Schaltstellung in die andere wird jeweils eine Drehmomentverbindung hergestellt und die andere getrennt. Der Hebel ist mit an sich bekannten Rast- oder Federelementen versehen, die ihn in der gewählten Stellung derart arretieren, daß er nur mit einer den Widerstand des Arretierungselementes überwindenden Kraft in die jeweils andere Schaltstellung bewegbar ist. Diese Rast- oder Federelemente können Nocken auf der Welle sein, die beim Verdrehen der Welle Federelemente überwinden müssen, oder Senken in der Welle, in die federbeaufschlagte in Bohrungen des Wellenlagers geführte Kugeln oder Zapfen mit balligem Ende einrasten, oder auch Zugfedern, die beim Schwenken des Hebels durch eine Verlängerung der Feder in einem Totpunkt zwischen den Endstellungen, diesen durch ihre Zugkraft in der jeweiligen Endstellung festhalten. Die genannte Kupplung mit einer Schaltklaue ist auf der Ausgangswelle des Getriebemotors drehmomentfest aber axial verschiebbar angeordnet. Weiterhin ist ein Zahnrad lose auf die Ausgangswelle des Getriebemotors aufgesteckt, das mit Aufnahmeöffnungen für Zapfen der Schaltklaue versehen ist.

Um eine Blockierung des elektrischen Verfahrantriebs durch das System der Hand-Notverfahreinrichtung zu vermeiden, ist eine Entkopplung der auf der Spindel des Handantriebs angeordneten Wandermutter von der Zahnstange zur Betätigung des Zahnrades der Einfahrwelle vorgesehen. Dadurch kann die Zahnstange relativ zur Mutter verschoben werden, wenn sich das Zahnrad auf der Einfahrwelle, angetrieben vom elektrischen Antrieb, dreht. Bei einer Notbetätigung des Verfahrantriebs von Hand wird die Wandermutter mittels der Spindel in eine Position gebracht, in der sie mit der vom elektrischen Antrieb verschobenen Zahnstange kraftschlüssig verbindbar ist und nach der Herstellung des Kraftschlusses wird durch Drehen der Spindel mit der Handkurbel mittels der im Eingriff befindlichen Wandermutter die Zahnstange bewegt, um den Schalter manuell ein- oder auszufahren. Zur Realisierung der Kopplung bzw. Entkopplung von Mutter und Zahnstange ist die Mutter durch eine flache Seite asymmetrisch zur Spindelbohrung ausgebildet, derart, daß sie in einer ersten Winkelstellung mit der Zahnstange nicht in Berührung kommt und nach dem Verdrehen in eine zweite Winkelstellung in die Zahnstange eingreift und so eine kraftschlüssige Verbindung herstellt. Dazu ist die Mutter an der Stelle, die in die Zahnstange eingreift, vorteilhaft so breit ausgeführt, daß sie den freien Raum zwischen zwei Stegen der Zahnstange in etwa ausfüllt. Die Mutter kann auch einen sich von der flachen Seite aus erstreckenden peripheren Schlitz aufweisen, der sich um etwa 90° des Umfangs der Mutter erstreckt, derart daß beim Drehen der Mutter in entsprechender Position ein Steg der Zahnstange in den Schlitz eintritt und die Mutter diesen Steg übergreift, womit die gewünschte kraftschlüssige Verbindung hergestellt ist. Befindet sich die Mutter in der Stellung "entkoppelt", bewegt sich die Zahnstange beim motorischen Verschieben derselben frei unter der flachen Seite der Mutter hindurch und wird von der Mutter nicht festgehalten. Andererseits ist die Mutter durch Drehen der Spindel gegenüber der Zahnstange frei verfahrbar, um sie in eine Position zu bringen, in der sie mit der, durch den elektrisch betriebenen Verfahrantrieb verschobenen, Zahnstange in Eingriff gebracht werden kann. Zum Kuppeln der Zahnstange mit der Mutter zum Zweck des manuellen Ein- oder Ausfahrens des Schalters, wird die Mutter in der Stellung "entkoppelt" mittels der Spindel in eine Position gebracht, in der sie beim Drehen in die Stellung "gekoppelt", mit der Zahnstange in Eingriff gelangt. Wird nun die Spindel gedreht, wird die Zahnstange von der Mutter mitgenommen und dreht mittels des Zahnrades die Einfahrwelle. In beiden Stellungen ist die Mutter gegen Verdrehen gesichert. Das kann vorteilhaft dadurch geschehen, daß ein an der Mutter befestigter, zum Bedienpult herausgeführter Verdrehhebel federnd in einer dort vorgesehenen Kulissen-führung bewegbar ist und in vorgesehene Aussparungen eingerastet werden kann.

Auf der Zahnstange kann auch ein sich in Richtung zur Spindel erstreckender, parallel zu den Stegen der Zahnstange verlaufender Fortsatz vorgesehen sein, der statt eines Steges der Zahnstange in den Schlitz eintritt und von der Mutter übergrifffen wird, womit die gewünschte kraftschlüssige Verbindung hergestellt ist.

Bei einer weiteren zweckmäßigen Lösung für die Kopplung oder Entkopplung von Spindel und Zahnstange ist auf der Zahnstange ein U-förmiger Bügel angeordnet, der zwei gegenüberliegende Bohrungen in den sich in die Richtung zur Spindel erstreckenden Schenkeln aufweist. Die Mutter besitzt einen Ansatz, der beim Verfahren derselben in diesen Bügel eintreten kann. Im Ansatz der Mutter befindet sich eine Querbohrung, in die eine mit Gewinde versehene Längsbohrung mittig mündet. Gegenüber der Mündung der Längsbohrung in die Querbohrung ist eine Senkung vorgesehen, in die im eingeschraubten Zustand die Spitze einer in die Längsbohrung eingeschraubten Schraube eintreten kann.

In der Querbohrung sind beiderseits der Einmündung der Längsbohrung mit balligen Köpfen versehene Stifte angeordnet, die durch Druckfedern in die Richtung zur Längsbohrung gedrückt werden.

Bei nicht eingeschraubter Schraube werden die Stifte durch die Druckfedern nach innen gedrückt und ragen nicht aus der Querbohrung im Ansatz der Mutter heraus. Diese ist folglich nicht kraftschlüssig mit dem auf der Zahnstange angeordneten Bügel verbunden, so daß sich beide Teile unabhängig voneinander bewegen können. Wird die Mutter in eine Position gebracht, in der die Bohrungen im Bügel mit der Querbohrung im Ansatz der Mutter axial ausgerichtet sind, können beim Einschrauben der mit einer Spitze versehenen Schraube die mit balligen Köpfen versehenen Stifte gegen die Kraft der Druckfedern in die Bohrungen des Bügels hineingedrückt werden und eine kraftschlüssige Verbindung zwischen der Mutter und dem Bügel, also mit der Zahnstange, herstellen.

Bei allen vorstehenden Lösungen wurde davon ausgegangen, im Schalterbau vorhandene, herkömmliche und bewährte Elemente zu verwenden, um größere Veränderungen zu vermeiden. Es ist aber auch möglich, statt der erforderlichen Entkopplung der Zahnstange von der selbsthemmenden Verbindung mit der Wandermutter eine Verbindung zu verwenden, die nicht selbsthemmend ist und folglich eine Entkopplung nicht erforderlich macht und bei der sich die Spindel bei elektrischer Betätigung des Verfahrantriebs ständig mitdreht oder umgekehrt bei manueller Betätigung der abgeschaltete Elektromotor mitgedreht wird. Das ist beispielsweise durch die Verwendung eines Kegelradgetriebes als Verbindung zwischen dem elektrischen und dem manuellen Antrieb möglich. Die Zugangsöffnung für die Betätigungswelle ist dann, wie das auch bei dem jetzigen Fahrantrieb der Fall ist, verschließbar.

Für den elektrischen Betrieb der Verfahreinrichtung sind die folgenden elektrischen Bedingungen und Verriegelungen vorgesehen, die in an sich bekannter Weise ausgeführt sind:
- die zum elektrischen Einfahren des Leistungsschalters benötigte Hilfsspannung für den Motor ist schon in der Trennstellung vorhanden. Sie wird vorteilhaft über einen Schleifkontakt zum Einschubrahmen zugeführt,
- die Schalterbetätigung ist in den Positionen "eingefahren" und "Prüfstellung" möglich, wenn der Hauptstromkreis getrennt ist,
- die Umschaltung der Motordrehrichtung in der Betriebsstellung des Schalters ist nur bei der Hebelstellung "Verfahren" möglich,
- die Zuschaltung der elektrischen Spannung zum Verfahren des Schalters ist zum Schutz des Getriebes nur dann möglich, wenn die Wandermutter für den Handantrieb und die Zahnstange sich außer Eingriff befinden,
- das elektrische Verfahren des Schalters ist nur in der Schalterstellung "Aus" möglich.

Die Erfindung wird im folgenden anhand von in den Figuren dargestellten bevorzugten Ausführungsbeispielen näher erläutert.

Die Fig.1 zeigt schematisch die Elemente der Drehmomentübertragung vom Getriebemotor wahlweise auf den Schalterantrieb oder die Einfahrwelle.

Die Fig.2 zeigt schematisch die räumliche Anordnung des Getriebemotors, der Kupplung zur Kraftübertragung auf den Schalterantrieb und des Zahnradgetriebes zur wahlweisen Kraftübertragung auf die Einfahrwelle des Niederspannungs-Leistungsschalters in perspektivischer Darstellung.

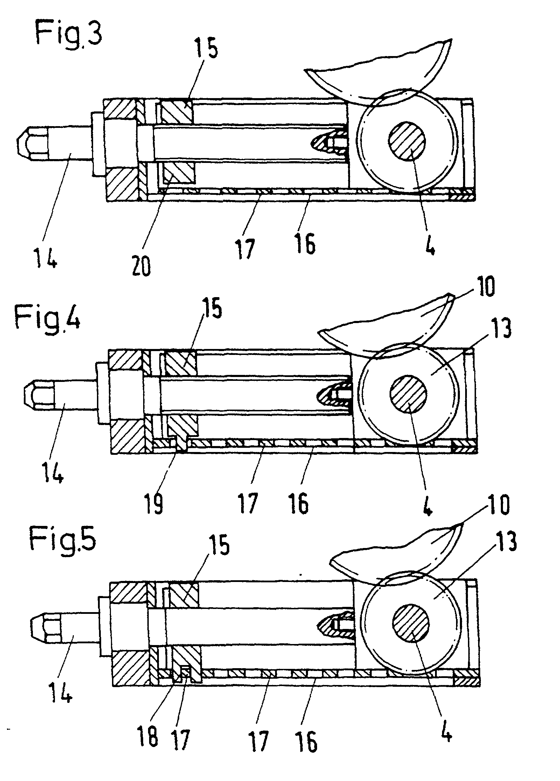

Die Fig.3 zeigt schematisch einen Teil des Verfahrantriebs in der Stellung "entkoppelt", für die Betätigung durch den Getriebemotor.

Die Fig.4 zeigt schematisch den gleichen Teil des Verfahrantriebs in der Stellung "gekoppelt", für die manuelle Betätigung, mit einem an den Stegabstand der Zahnstange angepaßten Mutterteil.

Die Fig.5 zeigt schematisch den gleichen Teil des Verfahrantriebs in der Stellung "gekoppelt", für die manuelle Betätigung, mit einem den Steg der Zahnstange übergreifenden Schlitz in der Mutter.

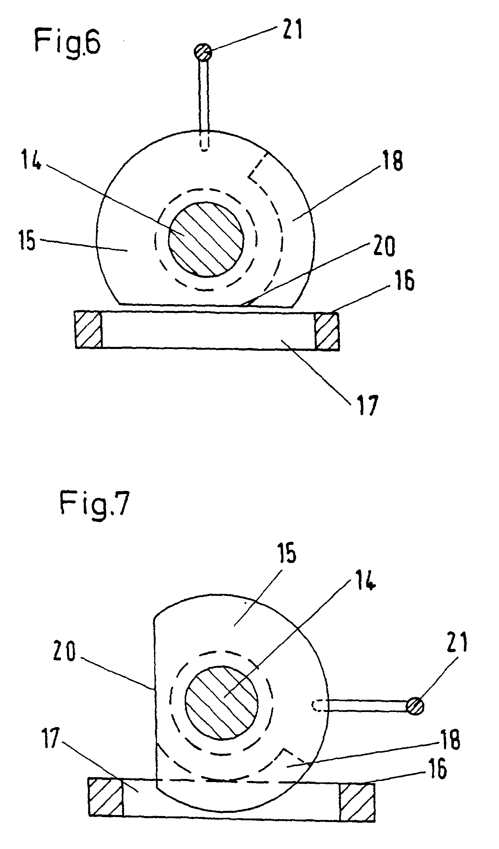

Die Fig.6 zeigt schematisch eine rund ausgebildete Mutter des manuellen Verfahrantriebs mit abgeflachter Seite und Schlitz sowie die Zahnstange in der Stellung "entkoppelt".

Die Fig.7 zeigt schematisch die gleiche Mutter des manuellen Verfahrantriebs und die Zahnstange in der Stellung "gekoppelt".

Die Fig.8 zeigt schematisch den gleichen Teil eines Verfahrantriebs wie in den Fig. 3 bis 5 mit einer anderen Lösung für die Kopplung und Entkopplung.

Die Fig.9 zeigt einen Schnitt entlang der Linie A-B in der Fig.8.

Die Fig.10 zeigt einen Schnitt entlang der Linie C-D in der Fig.9.

Erfindungsgemäß ist vorgesehen, daß durch den zur elektrischen Betätigung des Schalterantriebs 1 vorgesehenen Getriebe-Elektromotor 2 zwei Funktionen ausgeübt werden. Üblich ist die Übertragung des zum Spannen des Federspeichers erforderlichen Drehmomentes des Elektromotors 2 zum Federspeicher des Schalterantriebs 1 wobei ein Freilauf zum Handantrieb 3 für den Notbetrieb beim Ausfall des elektrischen Antriebs vorgesehen ist.

Zusätzlich zu dieser Funktion wird erfindungsgemäß der genannte Getriebemotor 2 zur Betätigung der Einfahrwelle 4 des Fahrantriebs des Leistungsschalters verwendet. Das geschieht durch eine Übertragung des Drehmomentes zur Einfahrwelle 4 des Leistungsschalters mittels eines Zahnradgetriebes 5. Hierzu wird eine schaltbare Kupplung 6, zweckmäßig einteilig mit einer Hälfte des Freilaufs für den Handantrieb 3, verwendet. Das Schalten der Kupplung 6 erfolgt durch das Umlegen eines Hebels 7, der von außen zugänglich am Bedienpult angeordnet ist. Beim Umlegen des Hebels 7 von einer Schaltstellung in die andere wird jeweils eine Drehmomentverbindung hergestellt und die andere getrennt. Das heißt, in der Hebelstellung 7a wird das Drehmoment des Motors zum Spannen des Federspeichers des Schalterantriebs 1 auf diesen übertragen und in der Hebelstellung 7b auf die Einfahrwelle 4 des Verfahrantriebs des Leistungsschalters. Der Hebel 7 ist mit nicht dargestellten allgemein bekannten Rast- oder Federelementen versehen, die ihn in der gewählten Stellung derart arretieren, daß er nur mit einer den Widerstand des Arretierungselementes überwindenden Kraft in die jeweils andere Schaltstellung bewegbar ist. Diese Rast oder Federelemente können Nocken auf der Welle sein, die beim Verdrehen der Welle Federelemente überwinden müssen, oder Senken in der Welle, in die federbeaufschlagte, in Bohrungen des Wellenlagers geführte Kugeln oder Zapfen mit balligem Ende einrasten, oder auch Zugfedern, die beim Schwenken des Hebels durch eine Verlängerung der Feder in einem Totpunkt zwischen den Endstellungen, diesen durch ihre Zugkraft in der jeweiligen Endstellung festhalten. Die Kupplung 6 mit der Schaltklaue 8 ist drehmomentfest aber axial verschiebbar auf der Ausgangswelle 9 des Getriebemotors 2 angeordnet. Weiterhin ist ein Zahnrad 10 lose auf die Ausgangswelle 9 des Getriebemotors 2 aufgesteckt, das Aufnahmeöffnungen 11 für Zapfen 12 der Schaltklaue 8 aufweist.

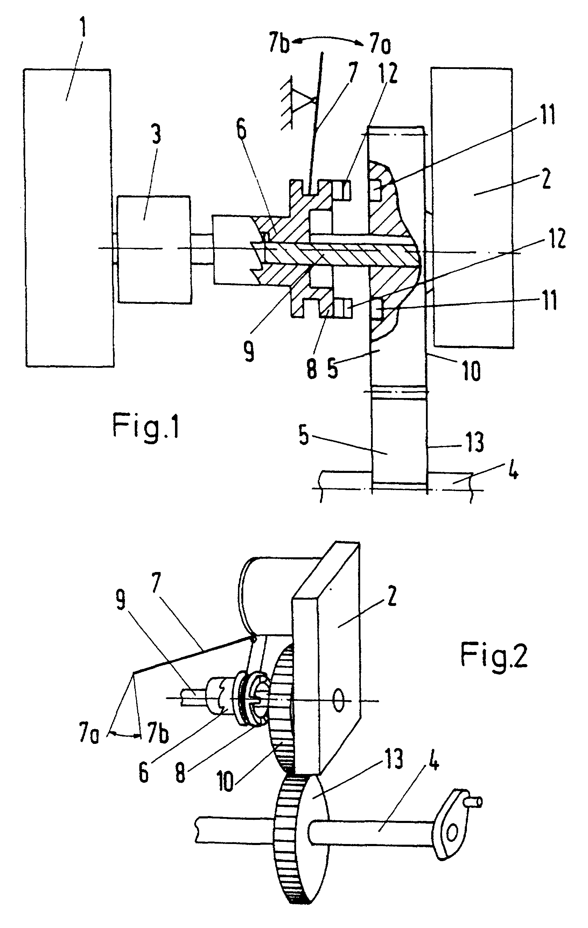

In der Fig.1 ist die Vorrichtung in dem Zustand dargestellt, in dem das Drehmoment der Ausgangswelle 9 des Getriebemotors 2 über die schaltbare Kupplung 6, die zweckmäßig einteilig mit einer Hälfte des Freilaufs für den Handantrieb 3 ausgebildet ist, auf den nicht dargestellten Federspeicher des Schalterantriebs 1 übertragen wird. In diesem Zustand befindet sich der von außen zugänglich am Bedienpult angeordnete Hebel 7 in seiner Schaltstellung 7a. Durch das Umlegen des Hebels 7 erfolgt das Schalten der Kupplung 6. Beim Umlegen des Hebels 7 von seiner Schaltstellung 7a in die Schaltstellung 7b wird die Kupplung 6 auf der Ausgangswelle 9 des Getriebemotors 2 in die Richtung zum Zahnrad 10 verschoben und die Zapfen 12 der Schaltklaue 8 greifen in die Aufnahmeöffnungen 11 des lose auf der Ausgangswelle 9 des Getriebemotors 2 angeordneten Zahnrades 10 ein und stellen so einen Kraftschluß zwischen der Ausgangswelle 9 und dem Zahnrad 10 her. Das Drehmoment des Getriebemotors 2 wird somit über dessen Ausgangswelle 9, die Kupplung 6 und das aus den Zahnrädern 10 und 13 bestehende Zahnradgetriebe 5 auf die Einfahrwelle 4 des Verfahrantriebs des Leistungsschalters übertragen. Der Hebel wird in seinen Endstellungen durch an sich bekannte, nicht dargestellte Rast- oder Federelemente in seiner jeweiligen Schaltstellung derart arretiert, daß er nur mit einer den Widerstand des Arretierungselementes überwindenden Kraft in die jeweils andere Schaltstellung bewegbar ist, so daß ein sicherer Verbleib in seiner jeweiligen Schaltstellung gewährleistet ist.

Um eine Blockierung des elektrischen Verfahrantriebs durch das System der Hand-Notverfahreinrichtung zu vermeiden, ist eine Entkopplung der auf der Spindel 14 des Handantriebs angeordneten Wandermutter 15 von der Zahnstange 16 zur Betätigung des Zahnrades 13 der Einfahrwelle 4 vorgesehen. Dadurch kann die Zahnstange 16 relativ zur Wandermutter 15 verschoben werden, wenn sich das Zahnrad 13 auf der Einfahrwelle 4, angetrieben vom elektrischen Antrieb, dreht.

Bei einer Notbetätigung des Fahrantriebs von Hand wird die Mutter 15 mittels der Spindel in eine Position gebracht, in der sie mit der vom elektrischen Antrieb verschobenen Zahnstange 16 kraftschlüssig verbunden werden kann und durch Drehen der Spindel 14 mit der Handkurbel wird dann mittels der Wandermutter 15 die Zahnstange 16 bewegt und die Einfahrwelle 4 mittels ihres Zahnrades 13 gedreht, um den Schalter manuell ein- oder auszufahren. Zur Realisierung der Kopplung bzw. Entkopplung von Mutter 15 und Zahnstange 16 ist die Mutter durch eine flache Seite 20 asymmetrisch zur Spindelbohrung ausgebildet, derart, daß sie in einer ersten Winkelstellung mit der Zahnstange 16 nicht in Berührung kommt und nach dem Verdrehen in eine zweite Winkelstellung in die Zahnstange 16 eingreift und so eine kraftschlüssige Verbindung herstellt. Dazu weist die Mutter 15 an der Stelle, die in die Zahnstange 16 eingreift, vorteilhaft eine Anpassung 19 auf, deren Breite so bemessen ist, daß sie den freien Raum zwischen zwei Stegen 17 der Zahnstange 16 in etwa ausfüllt. Die Mutter 15 kann auch einen sich von der flachen Seite 20 aus erstreckenden peripheren Schlitz 18 aufweisen, der sich um etwa 90° des Umfangs der Mutter 15 erstreckt, derart daß beim Drehen der Mutter 15 in entsprechender Position ein Steg 17 der Zahnstange 16 in den Schlitz 18 eintritt und die Mutter 15 diesen Steg 17 übergreift, womit die gewünschte kraftschlüssige Verbindung hergestellt ist.

Es kann auch auf der Zahnstange 16 ein sich in Richtung zur Spindel 14 erstreckender parallel zu den Stegen 17 der Zahnstange 16 verlaufender Fortsatz (nicht dargestellt) vorgesehen werden, der statt eines Steges 17 der Zahnstange 16 von der Mutter 15 übergriffen wird, um den Kraftschluß herzustellen.

Befindet sich die Mutter 15 in der Stellung "entkoppelt", bewegt sich die Zahnstange 16 beim motorischen Verschieben derselben frei unter der flachen Seite 20 der Mutter 15 hindurch und wird von der Mutter 15 nicht festgehalten.

Zum Kuppeln der Zahnstange 16 mit der Mutter 15 zum Zweck des manuellen Ein- oder Ausfahrens des Schalters, wird die Mutter 15 in der Stellung "entkoppelt" mittels der Spindel 14 in eine Position gebracht, in der sie beim Drehen in die Stellung "gekoppelt", mit der Zahnstange 16 in Eingriff gelangt. Wird nun die Spindel 14 gedreht, wird die Zahnstange 16 von der Mutter 15 mitgenommen und dreht mittels des Zahnrades 13 die Einfahrwelle 4. In beiden Stellungen ist die Mutter 15 gegen Verdrehen gesichert.Das kann beispielsweise dadurch geschehen, daß ein an der Mutter 15 befestigter, zum Bedienpult herausgeführter Verdrehhebel 21 federnd in einer dort vorgesehenen Kulissen-führung bewegbar ist und in vorgesehenen Aussparungen einrastet.

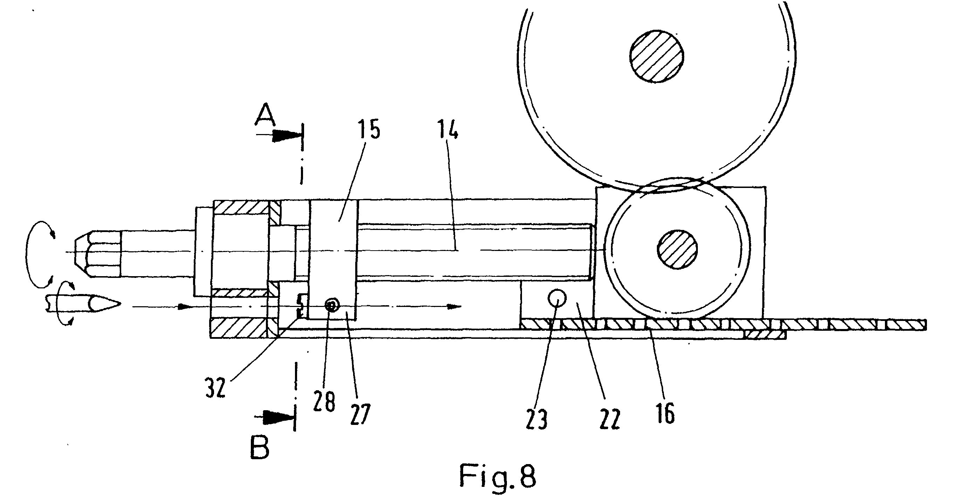

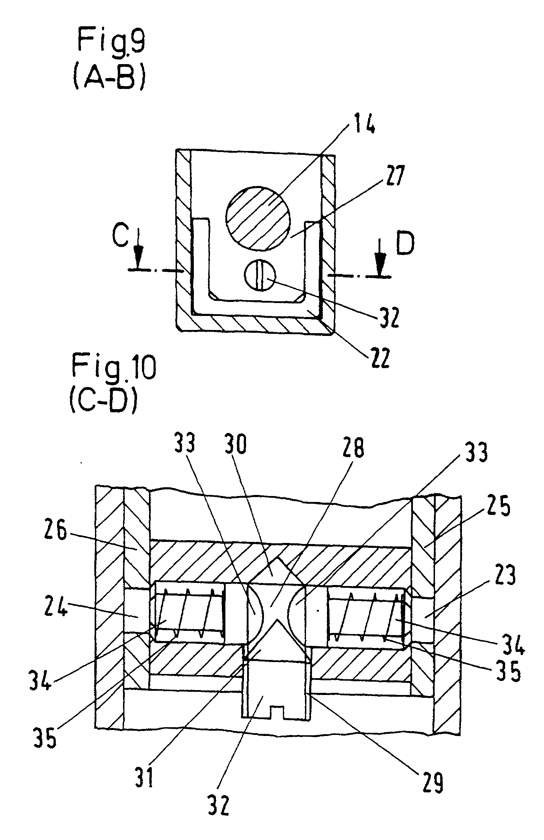

Bei der in den Fig.8 bis 10 dargestellten Lösung für die Kopplung oder Entkopplung von Spindel 14 und Zahnstange 16 ist auf der Zahnstange 16 ein U-förmiger Bügel 22 angeordnet, der zwei gegenüberliegende Bohrungen 23 und 24 in den sich in die Richtung zur Spindel 14 erstreckenden Schenkeln 25 und 26 aufweist. Die Mutter 15 besitzt einen Ansatz 27, der beim Verfahren derselben in diesen Bügel 22 eintreten kann. Im Ansatz 27 der Mutter 15 befindet sich eine Querbohrung 28, in die eine mit Gewinde versehene Längsbohrung 29 mittig mündet.

Gegenüber der Mündung der Längsbohrung 29 in die Querbohrung 28 ist eine Senkung 30 vorgesehen, in die im eingeschraubten Zustand die Spitze 31 einer in die Längsbohrung 29 eingeschraubten Schraube 32 hineintreten kann. In der Querbohrung 28 sind beiderseits der Einmündung der Längsbohrung 29 mit balligen Köpfen 33 versehene Stifte 34 angeordnet, die durch Druckfedern 35 in die Richtung zur Längsbohrung 29 gedrückt werden. Bei nicht eingeschraubter Schraube 32 werden die Stifte 34 durch die Druckfedern 35 nach innen gedrückt und ragen nicht aus der Querbohrung 28 im Ansatz 27 der Mutter 15 heraus.

Diese ist folglich nicht kraftschlüssig mit dem auf der Zahnstange 16 angeordneten Bügel 22 verbunden, so daß sich beide Teile unabhängig voneinander bewegen können. Wird die Wandermutter 15 in eine Position gebracht, in der die Bohrungen 23 und 24 im Bügel 22 mit der Querbohrung 28 im Ansatz 27 der Mutter 15 axial ausgerichtet sind, können beim Einschrauben der mit einer Spitze 31 versehenen Schraube 32 die mit balligen Köpfen 33 versehenen Stifte 34 gegen die Kraft der Druckfedern 35 in die Bohrungen 23 und 24 des Bügels 22 hineingedrückt werden und eine kraftschlüssige Verbindung zwischen der Wandermutter 15 und dem Bügel 22, also mit der Zahnstange 16 herstellen.

Die Vorteile der Erfindung bestehen darin, daß ohne den Einsatz eines zusätzlichen Elektro-Getriebemotors eine elektrische Betätigung des Verfahrantriebs möglich wird und das aufwendige Aus- und Einfahren der schweren Leistungsschalter mit Hilfe der Handkurbel entfällt. Darüber hinaus bietet eine elektrische Betätigung mit ihren üblichen Verriegelungen gegen eine Fehlbedienung eine erhöhte Sicherheit für das Bedienpersonal.

## Patentansprüche

1. Verfahreinrichtung für Niederspannungs-Leistungsschalter, mit einer auf einer Gewindespindel angeordneten Wandermutter, die kraftschlüssig mit einer Zahnstange zur Betätigung des Fahrantriebs verbunden ist,
**gekennzeichnet durch** eine wahlweise kraftbetriebene oder handbetriebene Verfahrmöglichkeit, wobei
- nur ein Elektromotor (2) sowohl zum Spannen des Federspeichers für den Schalterantrieb (1), als auch zur Betätigung des Fahrantriebs des Leistungsschalters vorgesehen ist,
- eine schaltbare Kupplung (6) mit einer Schaltklaue (8) zur wahlweisen Übertragung des Drehmomentes des Motors (2) auf den Schalterantrieb (1) oder den Fahrantrieb, auf der Ausgangswelle (9) des Getriebemotors (2) drehmomentfest aber axial verschiebbar angeordnet ist,
- ein Zahnradgetriebe (5) zur Übertragung des Drehmomentes des Motors (2) auf die Zahnstange (16) des Fahrantriebs vorhanden ist, dessen eines Zahnrad (10) lose auf die Ausgangswelle (9) des Getriebemotors (2) aufgesteckt und mit Aufnahmeöffnungen (11) für Zapfen (12) der Schaltklaue (8) versehen ist,
- ein von außen zugänglich am Bedienpult angeordneter Hebel (7) zum Schalten der Kupplung (6) mit Rast- oder Federelementen zur Arretierung des Hebels (7) in der gewählten Stellung (7a; 7b) vorhanden ist,
- weiterhin zur Vermeidung einer Blockierung des elektrischen Verfahrantriebs durch das System der Hand-Notverfahreinrichtung eine Entkopplung der auf der Spindel (14) des Handantriebs angeordneten Wandermutter (15) von der Zahnstange (16) zur Betätigung des Zahnrades (13) der Einfahrwelle (4) vorgesehen ist.

2. Verfahreinrichtung nach Anspruch 1,
**dadurch gekennzeichnet**, daß die schaltbare Kupplung (6) einteilig mit einer Hälfte des Freilaufs für den Schalterantrieb (1) ausgebildet ist.

3. Verfahreinrichtung nach Anspruch 1,
**dadurch gekennzeichnet**, daß die Wandermutter (15) asymmetrisch zur Spindelbohrung mit einer flachen Seite (20) ausgebildet ist, derart, daß sie in einer ersten Winkelstellung mit der Zahnstange (16) nicht in Berührung kommt und nach dem Verdrehen in eine zweite Winkelstellung zur Herstellung einer kraftschlüssigen Verbindung in die Zahnstange (16) eingreift.

4. Verfahreinrichtung nach Anspruch 3,
**dadurch gekennzeichnet**, daß die Wandermutter (15) an der Stelle, die in die Zahnstange (16) eingreift, eine solche Breite aufweist, daß sie den freien Raum zwischen zwei Stegen (17) der Zahnstange (16) in etwa ausfüllt.

5. Verfahreinrichtung nach Anspruch 3,
**dadurch gekennzeichnet**, daß die Wandermutter (15) einen sich von der flachen Seite (20) aus erstreckenden peripheren Schlitz (18) aufweist, der sich um etwa 90° des Umfangs der Mutter (15) erstreckt, und derart bemessen ist, daß beim Drehen der Wandermutter (15) in entsprechender Position ein Steg (17) der Zahnstange (16) in den Schlitz (18) eintretbar und durch die Wandermutter (15) übergreifbar ist.

6. Verfahreinrichtung nach den Ansprüchen 3 bis 5,
**dadurch gekennzeichnet**, daß die Wandermutter (15) in beiden Winkelstellungen gegen Verdrehen gesichert ist.

7. Verfahreinrichtung nach den Ansprüchen 3 bis 6,
**dadurch gekennzeichnet**, daß ein an der Wandermutter (15) befestigter, zum Bedienpult herausgeführter Verdrehhebel (21) federnd in einer am Bedienpult vorgesehenen Kulissenführung bewegbar und in dort vorhandene Aussparungen einrastbar ist.

8. Verfahreinrichtung nach einem der vorstehenden Ansprüche,
**dadurch gekennzeichnet**, daß auf der Zahnstange (16) ein sich in Richtung zur Spindel (14) erstreckender, parallel zu den Stegen (17) der Zahnstange (16) verlaufender Fortsatz vorgesehen ist.

9. Verfahreinrichtung nach Anspruch 1,
**dadurch gekennzeichnet**, daß auf der Zahnstange (16) ein U-förmiger Bügel (22) angeordnet ist, der zwei gegenüberliegende Bohrungen (23; 24) in den sich in die Richtung zur Spindel (14) erstreckenden Schenkeln (25; 26) aufweist und die Wandermutter (15) einen Ansatz (27) besitzt, der beim Verfahren derselben in diesen Bügel (22) eintretbar ist, daß sich im Ansatz (27) der Wandermutter (15) eine Querbohrung (28) befindet, in die eine mit Gewinde versehene Längsbohrung (29) mittig mündet und gegenüber der Mündung der Längsbohrung (29) in die Querbohrung (28) eine Senkung (30) vorgesehen ist, in die im eingeschraubten Zustand die Spitze (31) einer in die Längsbohrung (28) eingeschraubten Schraube (32) hineinragt, und daß in der Querbohrung (28) beiderseits der Einmündung der Längsbohrung (29) mit balligen Köpfen (33) versehene Stifte (34) angeordnet sind, die durch Druckfedern (35) in die Richtung zur Längsbohrung (29) beaufschlagt sind.

10. Verfahreinrichtung nach Anspruch 1,
**dadurch gekennzeichnet**, daß eine nicht selbsthemmende mechanische Verbindung zwischen dem elektrischen und dem manuellen Fahrantrieb besteht.

11. Verfahreinrichtung nach Anspruch 10,
**dadurch gekennzeichnet**, daß die nicht selbsthemmende Verbindung ein Kegelradgetriebe ist.

12. Verfahreinrichtung nach einem der vorstehenden Ansprüche,
**dadurch gekennzeichnet**, daß für den elektrischen Betrieb der Verfahreinrichtung die folgenden in an sich bekannter Weise ausgeführten elektrischen Bedingungen und Verriegelungen vorgesehen sind:
- die zum elektrischen Einfahren des Leistungsschalters benötigte Hilfsspannung für den Motor ist schon in der Trennstellung vorhanden,
- die Schalterbetätigung ist in den Positionen "eingefahren" und "Prüfstellung" möglich, wenn der Hauptstromkreis getrennt ist,
- die Umschaltung der Motordrehrichtung in der Betriebsstellung des Schalters ist nur bei der Hebelstellung "Verfahren" möglich,
- die Zuschaltung der elektrischen Spannung zum Verfahren des Schalters ist zum Schutz des Getriebes nur dann möglich, wenn die Wandermutter (15) für den Handantrieb und die Zahnstange (16) sich außer Eingriff befinden,
- das elektrische Verfahren des Schalters ist nur in der Schalterstellung "Aus" möglich.

## Claims

1. Traversing device for low-voltage circuit breakers, with a travelling nut arranged on a threaded spindle, which travelling nut is frictionally connected to a gear rack for the actuation of the travelling mechanism, characterized by a selectively power-operated or manually operated traversing possibility, whereby
- only one electric motor (2) is provided both for tensioning the spring energy store for the switch mechanism (1) and for actuating the travelling mechanism of the circuit breaker,
- a switchable coupling (6) with a shifting claw (8) for the selective transfer of the torque of the motor (2) to the switch mechanism (1) or the travelling mechanism is arranged on the output shaft (9) of the gear motor (2) in a torque-resistant but axially displaceable manner,
- there is a gearing (5) to transfer the torque of the motor (2) to the gear rack (16) of the travelling mechanism, the one gearwheel (10) of which gearing is attached loosely to the output shaft (9) of the gear motor (2) and is provided with receiving openings (11) for journals (12) of the shifting claw (8),
- there is a lever (7), arranged on the control console such that it is accessible from the outside, for switching the coupling (6), with catch or spring elements for stopping the lever (7) in the selected position (7a; 7b),
- furthermore, to avoid a blocking of the electrical traversing mechanism by way of the system of the manual emergency traversing device, a decoupling of the travelling nut (15), arranged on the spindle (14) of the manual mechanism, from the gear rack (16) is provided for the actuation of the gearwheel (13) of the positioning shaft (4).

2. Traversing device according to claim 1, characterized in that the switchable coupling (6) is constructed in one part with half of the free-running for the switch mechanism (1).

3. Traversing device according to claim 1, characterized in that the travelling nut (15) is constructed asymmetrically to the spindle bore with a flat side (20) in such a way that in a first angular position it does not come into contact with the gear rack (16) and; after the rotation into a second angular position, engages into the gear rack (16) to produce a frictional connection.

4. Traversing device according to claim 3, characterized in that the travelling nut (15) has such a width at the point which engages into the gear rack (16) that it fills the free space between two bars (17) of the gear rack (16) to some extent.

5. Traversing device according to claim 3, characterized in that the travelling nut (15) has a peripheral slot (18) extending from the flat side (20), which slot extends around about 90° of the circumference of the nut (15), and is dimensioned in such a way that, upon rotation of the travelling nut (15) in an appropriate position, a bar (17) of the gear rack (16) can enter into the slot (18) and can be overlapped by the travelling nut (15).

6. Traversing device according to claims 3 to 5, characterized in that the travelling nut (15) is secured against rotation in both angular positions.

7. Traversing device according to claims 3 to 6, characterized in that a rotary lever (21) secured to the travelling nut (15) and brought out to the control console is movable in a resilient manner in a connecting link guide provided on the control console and can be engaged into recesses present there.

8. Traversing device according to one of the preceding claims, characterized in that an extension extending in the direction of the spindle (14) and running parallel to the bars (17) of the gear rack (16) is provided on the gear rack (16).

9. Traversing device according to claim 1, characterized in that on the gear rack (16) a U-shaped clip (22) is arranged, which has two opposing bores (23; 24) in the limbs (25; 26) extending in the direction of the spindle (14), and the travelling nut (15) has a projection (27) which, upon the traversing of the same, can enter into this clip (22), in that in the projection (27) of the travelling nut (15) a transverse bore (28) is located, into which a longitudinal bore (29) provided with thread opens centrally, and opposite the opening of the longitudinal bore (29) into the transverse bore (28) a depression (30) is provided, into which, in the screwed-in state, the tip (31) of a screw (32) screwed into the longitudinal bore (28) projects, and in that in the transverse bore (28) on both sides of the mouth of the longitudinal bore (29) pins (34) provided with spherical heads (33) are arranged, which are loaded by pressure springs (35) in the direction of the longitudinal bore (29).

10. Traversing device according to claim 1, characterized in that there is a non-self-locking mechanical connection between the electrical and the manual travelling mechanism.

11. Traversing device according to claim 10,
characterized in that the non-self-locking connection is a bevel gearing.

12. Traversing device according to one of the preceding claims, characterized in that the following electrical conditions and interlockings, designed in known manner, are provided for the electrical operation of the traversing device:
- the auxiliary voltage for the motor, required for the electrical installation of the circuit breaker, is already present in the isolated position,
- the switch actuation is possible in the positions "installed" and "test position", if the main circuit is isolated,
- the switch-over of the motor direction of rotation in the operating position of the switch is only possible with the lever position "traversing",
- the connection of the electrical voltage for the traversing of the switch is only possible for the protection of the gear if the travelling nut (15) for the manual mechanism and the gear rack (16) are not engaged,
- the electrical traversing of the switch is only possible in the switch position "Off".

## Revendications

1. Dispositif de déplacement pour un disjoncteur basse tension, comprenant un écrou se déplaçant sur une broche filetée et relié à coopération de force avec une crémaillère pour l'actionnement de l'entraînement en déplacement,
caractérisé par une possibilité de déplacement au choix sous l'action d'une force ou manuellement,
- seul un moteur (2) électrique est prévu tant pour tendre le ressort accumulateur de l'entraînement (1) du disjoncteur que pour l'actionnement de l'entraînement en déplacement du disjoncteur,
- un embrayage (6) pouvant être débrayé ayant un crabot (8) de transmission au choix du couple de rotation du moteur (2) à l'entraînement (1) du disjoncteur ou à l'entraînement en déplacement est monté solidaire en rotation de l'arbre (9) de sortie du moteur (2), mais avec possibilité de coulissement axial,
- il est prévu un engrenage (5) de transmission du couple de rotation du moteur (2) à la crémaillère (16) de l'entraînement en déplacement, dont l'une des roues (10) dentées est enfilée folle sur l'arbre (9) de sortie du moteur (2) et est munie d'ouvertures (11) de réception de tourillons (12) du crabot (8),
- il est prévu un levier (7) disposé de manière accessible de l'extérieur sur le pupitre de commande et destiné à faire embrayer l'embrayage (6) avec des éléments à rainure ou languette pour bloquer le levier (7) dans la position (7a ; 7b) choisie,
- en outre pour éviter un blocage de l'entraînement électrique en déplacement par le système du dispositif de déplacement de secours à la main, il est prévu un désaccouplement de l'écrou (7) monté mobile sur la broche (14) de l'entraînement manuel de la crémaillère (16) pour l'actionnement de la roue (13) dentée de l'arbre (4) d'entrée destiné au déplacement.

2. Dispositif de déplacement suivant la revendication 1, caractérisé en ce que l'embrayage (6) qui peut être débrayé est constitué d'une pièce avec une moitié de la roue libre du dispositif d'entraînement (1) du disjoncteur.

3. Dispositif de déplacement suivant la revendication 1, caractérisé en ce que l'écrou (15) est constitué de manière dissymétrique par rapport à l'alésage de la broche en ayant un côté (20) plat de façon à ne pas venir dans une première position angulaire en contact avec la crémaillère (16) et, après la rotation dans une deuxième position angulaire, à engrener dans la crémaillère (16) pour ménager une liaison par coopération de force.

4. Dispositif de déplacement suivant la revendication 3, caractérisé en ce que l'écrou (15) a, à l'endroit qui engrène dans la crémaillère (16), une largeur telle qu'il remplit à peu près l'espace libre compris entre deux dents (17) de la crémaillère (16).

5. Dispositif de déplacement suivant la revendication 3, caractérisé en ce que l'écrou (15) comporte une fente (18) périphérique s'étendant à partir du côté (20) plat, s'étendant sur 90° environ du pourtour de l'écrou et ayant des dimensions telles que, lors de la rotation de l'écrou (15) en une position adéquate, une dent (17) de la crémaillère (16) peut pénétrer dans la fente (18) et être chevauchée par l'écrou (15).

6. Dispositif de déplacement suivant les revendications 3 à 5, caractérisé en ce que l'écrou (15) est bloqué en rotation dans les deux positions angulaires.

7. Dispositif de déplacement suivant les revendications 3 à 6, caractérisé en ce que le levier (21) de rotation, qui est fixé à l'écrou (15) et qui sort du pupitre de commande, peut être déplacé élastiquement dans une coulisse prévue sur le pupitre de commande et y être encliqueté dans des évidements qui s'y trouvent.

8. Dispositif de déplacement suivant l'une des revendications précédentes, caractérisé en ce qu'il est prévu sur la crémaillère (16) un prolongement s'étendant en direction de la broche (14) et parallèlement aux dents (17) de la crémaillère (16).

9. Dispositif de déplacement suivant la revendication 1, caractérisé en ce qu'il est monté sur la crémaillère (16) un étrier (22) en forme de U qui comporte deux trous (23, 24) opposés dans les branches (25, 26) s'étendant dans la direction allant vers la broche (14) et l'écrou (15) a un talon (27) qui, lors du déplacement de celui-ci, peut pénétrer dans cet étrier (22) en ce que dans le talon (27) de l'écrou (15) se trouve un trou (28) transversal dans lequel débouche au milieu une boutonnière (29) taraudée et par rapport à l'embouchure de la boutonnière (29), il est prévu dans le trou (28) transversal un renfoncement (30) dans lequel pénètre à l'état vissé la pointe (31) d'une vis (32) vissée dans la boutonnière (28) et en ce qu'il est monté dans le trou (28) transversal de part et d'autre de l'embouchure de la boutonnière (29) des doigts (34) munis de têtes (33) bombées qui sont repoussées par des ressorts (35) de compression dans la direction de la boutonnière (29).

10. Dispositif de déplacement suivant la revendication 1, caractérisé en ce qu'une liaison mécanique, qui n'est pas autobloquante, est prévue entre le dispositif d'entraînement en déplacement électrique et le dispositif d'entraînement en déplacement manuel.

11. Dispositif de déplacement suivant la revendication 10, caractérisé en ce que la liaison qui n'est pas autobloquante est un engrenage par pignons coniques.

12. Dispositif de déplacement suivant l'une des revendications précédentes, caractérisé en ce que, pour l'alimentation électrique du dispositif de déplacement, il est prévu les conditions électriques et les verrouillages suivants en soi connus :
- la tension auxiliaire pour le moteur qui est nécessaire pour la connexion électrique du disjoncteur est déjà présente dans la position de coupure,
- l'actionnement du disjoncteur est possible dans les positions "connexion" et "position de vérification" si le circuit principal de courant est coupé,
- le passage du sens de rotation du moteur dans la position de fonctionnement du disjoncteur n'est possible que dans la position du levier "déplacement",
- l'application de la tension électrique pour le déplacement du disjoncteur est, en vue de la protection de l'engrenage, possible seulement si l'écrou (3) pour l'entraînement manuel et la crémaillère (16) ne sont pas en prise,
- le déplacement électrique du disjoncteur n'est possible que dans la position du disjoncteur "ouvert".
